# EUROPEAN PATENT APPLICATION

(11) **EP 4 283 959 A1**
(43) Date of publication of application: **29.11.2023**
(21) Application number: 22791963.6
(22) Date of filing: 15.04.2022
(51) Int. Cl.: H04M 1/02, H04M 1/03, H04R 3/02

(54) **ELECTRONIC DEVICE AND OPERATION METHOD THEREFOR**

(30) Priority: 21.04.2021 KR 20210051871
(71) Applicant: Samsung Electronics Co., Ltd., Suwon-si, Gyeonggi-do 16677 (KR)
(72) Inventor: CHOI, Kyuwon, Suwon-si, Gyeonggi-do 16677 (KR); KIM, Taehun, Suwon-si, Gyeonggi-do 16677 (KR); LEE, Youngsun, Suwon-si, Gyeonggi-do 16677 (KR); HUH, Jaeyoung, Suwon-si, Gyeonggi-do 16677 (KR)
(74) Representative: Nederlandsch Octrooibureau
(86) International application number: PCT/KR2022/005467
(87) International publication number: WO 2022/225263

(57) **Abstract**

According to certain embodiments, an electronic device comprises: first housing; a first substrate disposed in the first housing; a second housing; a second substrate disposed in the second housing; a flexible printed circuit board (FPCB) connecting the first substrate and the second substrate; a hinge module hingably connecting the first housing and the second housing; a hinge cover covering the hinge module, the hinge cover having a microphone hole formed therein; at least one first microphone disposed in the first housing; a speaker disposed in the second housing; and at least one second microphone disposed in the hinge module, and configured to collect external sound through the microphone hole formed in the hinge cover, and mounted on a portion extending from the FPCB.

## Description

### [Technical Field]

Various embodiments of the disclosure relate to an electronic device and a method for operating the same.

### [Background Art]

Electronic devices (for example, mobile terminals, smartphones, tablet personal computers (PC), or wearable terminals) may provide function. For example, electronic devices may provide an imaging function, a music playback function, a navigation function, a telephone call function, a short-range wireless communication (for example, Bluetooth, Wi-Fi, or near field communication (NFC)) function, an electronic payment function, and/or a speech recognition function.

An electronic device may include a sound output module (for example, speaker or receiver) on the upper end of a housing for a telephone call function, and may include a sound input module (for example, microphone) on the lower end of the housing. There has recently been commercialization of foldable electronic devices which can be folded with reference to at least one axis.

### [Disclosure of Invention]

### [Technical Problem]

With a foldable electronic device, a problem can occur that when the device is folded, the microphone and the speaker may be close together in the folded state. When the microphone and speaker are close together, feedback can occur, where the speaker provides input to the microphone, and the microphone provides input to the speaker. This can cause an unpleasant howling sound.

### [Solution to Problem]

According to certain embodiments, an electronic device comprises: first housing; a first substrate disposed in the first housing; a second housing; a second substrate disposed in the second housing; a flexible printed circuit board (FPCB) connecting the first substrate and the second substrate; a hinge module hingably connecting the first housing and the second housing; a hinge cover covering the hinge module, the hinge cover having a microphone hole formed therein; at least one first microphone disposed in the first housing; a speaker disposed in the second housing; and at least one second microphone disposed in the hinge module, and configured to collect external sound through the microphone hole formed in the hinge cover, and mounted on a portion extending from the FPCB.

According to certain embodiments, a method of operating an electronic device including a first microphone positioned in a lower end of a first housing and a second microphone positioned in a hinge module hingably connecting the first housing and a second housing, comprises: detecting execution of an application or function using at least one of the first microphone and the second microphone; and adjusting roles of the first microphone and the second microphone based on a state of the electronic device.

### [Advantageous Effects of Invention]

According to various embodiments of the disclosure, a sound input module may be positioned on a hinge module for making an electronic device foldable such that the sound input module can be disposed more freely (or restrictions on disposition of the sound input module can be lifted), and the sound performance in various states of the electronic device (for example, folding state, intermediate-folding state, and unfolding state) can be improved.

Various embodiments of the disclosure may provide various functions (for example, audio zoom function, speaker phone function, echo cancelling function, noise suppression function) by utilizing multiple sound input modules, based on the state of an electronic device (for example, folding state, intermediate-folding state, or unfolding state).

### [Brief Description of Drawings]

FIG. 1 is a block diagram illustrating an electronic device in a network environment according to various embodiments of the disclosure.
FIG. 2 is a diagram illustrating an example of an electronic device according to various embodiments of the disclosure.
FIG. 3 is a diagram illustrating an example of a hinge module in which a second microphone is positioned according to various embodiments of the disclosure.
FIG. 4A is a cross-sectional view illustrating an electronic device in a folded state with respect to A-A' according to various embodiments of the disclosure.
FIG. 4B is a cross-sectional view illustrating an electronic device in an unfolded state with reference to B-B' according to various embodiments of the disclosure.
FIG. 5 is a diagram illustrating an example of a flexible printed circuit board according to various embodiments of the disclosure.
FIG. 6A is a diagram illustrating an example of operation of sound input modules when a call is performed in an unfolded state of an electronic device according to various embodiments of the disclosure.
FIG. 6B is a diagram illustrating an example of operation of sound input modules when a call is performed in a folded state of an electronic device according to various embodiments of the disclosure.
FIG. 7A is a diagram illustrating an example in which an electronic device provides an audio zoom function using sound input modules in an unfolded state according to various embodiments of the disclosure.
FIG. 7B is a diagram illustrating an example in which an electronic device provides an audio zoom function using sound input modules in an intermediate-folded state according to various embodiments of the disclosure.
FIG. 8 is a diagram illustrating an effect of an audio zoom function of an electronic device according to various embodiments of the disclosure.
FIG. 9 is a diagram illustrating experimental results on echo canceling performance and noise suppression performance of an electronic device according to various embodiments of the disclosure.
FIG. 10 is a flowchart illustrating a method of operating an electronic device according to various embodiments of the disclosure.

### [Mode for Carrying out the Invention]

Certain embodiments of the disclosure may provide an electronic device and a method for operating the same, wherein a microphone can be disposed on a hinge module for folding the electronic device.

According to certain embodiments of the disclosure, a sound input module may be positioned on a hinge module for making an electronic device foldable such that the sound input module can be disposed more freely (or restrictions on disposition of the sound input module can be lifted), and the sound performance in various states of the electronic device (for example, folding state, intermediate-folding state, and unfolding state) can be improved.

Certain embodiments of the disclosure may provide various functions (for example, audio zoom function, speaker phone function, echo cancelling function, noise suppression function) by utilizing multiple sound input modules, based on the state of an electronic device (for example, folding state, intermediate-folding state, or unfolding state).

Hereinafter, various embodiments of the disclosure will be described with reference to the accompanying drawings. In the disclosure, specific embodiments are illustrated in the drawings and the related detailed description is described, but this is not intended to limit the various embodiments of the disclosure to a specific form. For example, it will be apparent to those of ordinary skill in the art to which the disclosure pertains that the embodiments of the disclosure may be variously changed.

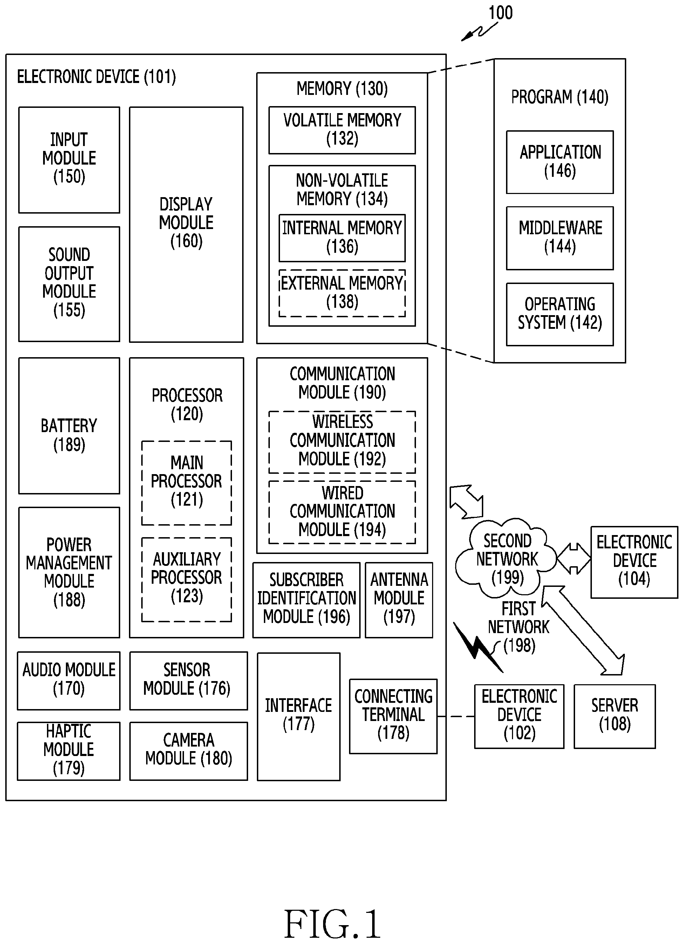

FIG. 1 describes an electronic device 101. The electronic device 101 can include a microphone as part of the input module 150 for converting the user's voice to an input electronic signal, and a speaker 155 for converting an output electronic signal to sound. For example, when the electronic device 101 is used for a phone function, the user may talk into a microphone. The microphone may convert the user's voice into an electrical signal that is suitable for transmission using radio and the wireline. The electronic device may receive an electronic signal from the other party. The speaker can convert the electronic signal to sound that the user can hear.

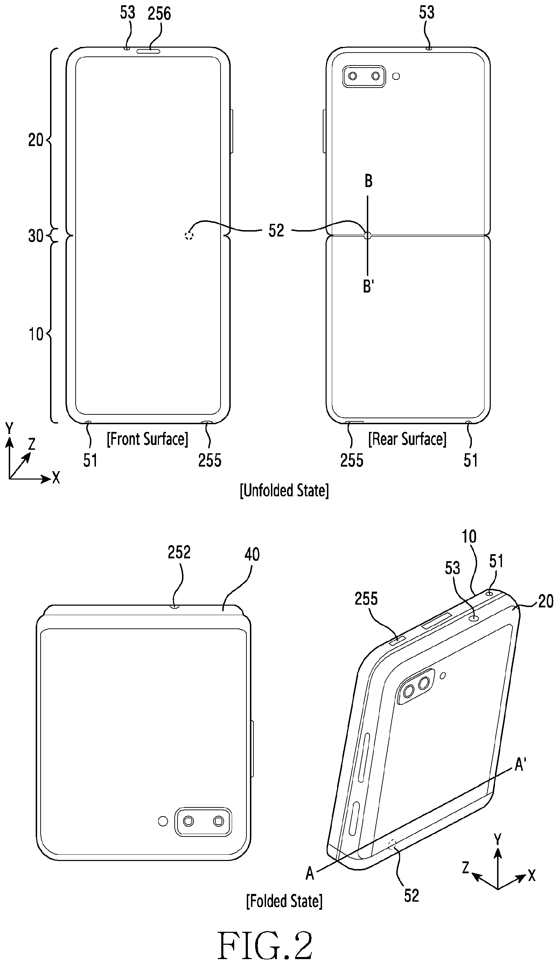

FIG. 2 describes a foldable housing of an electronic device 101. The electronic device 101 may include a first housing 10 and a second housing 20 that are hingably connected, such that first housing 10 and second housing 20 can either be in an unfolded state or a folded state. The electronic device 101 can use different microphones and speakers, depending, at least in part, on the folded or unfolded state to avoid audio feedback.

FIG. 1 is a block diagram illustrating an electronic device in a network environment according to an embodiment of the disclosure.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). 11

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input 1module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output 1module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. An electronic device 101 may provide an ultra-low latency service using, for example, distributed computing or mobile edge computing. In another embodiment, an external electronic device 104 may include an Internet of things (IoT) device. A server 108 may be an intelligent server using machine learning and/or neural networks. According to an embodiment, an external electronic device 104 or the server 108 may be included in a second network 199. The electronic device 101 may be applied to an intelligent service (e.g., a smart home, a smart city, a smart car, or health care) based on 5G communication technology and IoT-related technology.

Generally speaking, the user experience is better when there is a larger display module 160. However, a larger display module 160 generally may require a larger dimension, particularly a large two-dimensional surface area. A larger surface area, however, makes the electronic device 101 harder for a user to carry about their person.

A foldable housing allows the user to enjoy a larger display 160. When the user is carrying the device, or otherwise not looking at the display 160, the user can fold the electronic device 101, thereby reducing at least one dimension. Reducing the at least one dimension makes the electronic device 101 easier for the user to carry about their person.

FIG. 2 shows an electronic device with a foldable housing (a foldable electronic device).

FIG. 2 is a diagram illustrating an example of an electronic device according to various embodiments of the disclosure.

Referring to FIG. 2, an electronic device (e.g., the electronic device 101) according to an embodiment of the disclosure may be a foldable electronic device 201 that can be folded with respect to a horizontal axis (X axis). For example, the foldable electronic device 201 may be folded with respect to the horizontal axis at a central portion of a vertical axis (Y axis). This is only an example, and does not limit the embodiment of the disclosure. For example, the foldable electronic device 201 may be folded at two or more positions thereof. As another example, the foldable electronic device 201 may be folded in at least one portion thereof with respect to the vertical axis.

According to various embodiments of the disclosure, the foldable electronic device 201 may include a first housing 10, a second housing 20, a hinge module 30 that connects the first housing 10 and the second housing 20 to be foldable, and a hinge cover 40 that covers the hinge module 30 to prevent the hinge module 30 from being exposed to the outside. In addition, the foldable electronic device 201 may include a plurality of sound input modules (e.g., a microphone) and a plurality of sound output modules (e.g., a speaker and/or a receiver).

According to various embodiments, the plurality of sound output modules may include a receiver 256 configured to output a received sound during a phone call and a speaker 255 configured to output an audio signal when electronic device is playing an audio or video. The receiver 256 may be disposed (or positioned) on an upper end of a front surface of the second housing to output sound to a front surface on which a display 260 (e.g., a display module 160) is disposed when the foldable electronic device 201 is unfolded. The speaker 255 may be disposed on a lower surface of the first housing 10 to output sound to the lower side.

According to various embodiments, the plurality of sound input modules may include a first microphone (not shown), a second microphone (not shown), and a third microphone (not shown). The first microphone may be disposed (or positioned) at the lower end of the first housing 10 to collect sound through a first microphone hole 51 provided on the lower surface of the first housing 10. The second microphone 252 may be disposed in the hinge module 30 to collect sound through a second microphone hole 52 provided on one surface of the hinge cover 40. The third microphone 253 may be disposed on an upper end of the second housing 20 to collect sound through a third microphone 53 provided on an upper surface of the second housing 20. Hereinafter, for convenience of explanation, the reference numerals of the first microphone hole 51, the second microphone hole 52, and the third microphone hole 53 are changed to 251, 252, and 253, respectively, and they are illustrated and described as indicating a first microphone 251, a second microphone 252, and a third microphone 253 positioned in the housing, respectively.

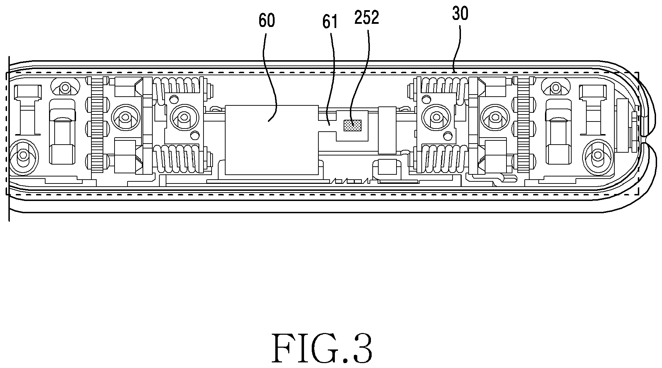

According to various embodiments, the second microphone 252 may be mounted on a second flexible printed circuit board (FPCB) extending from a first flexible printed circuit board (FPCB) (or connected to the first FPCB) that connects a first printed circuit board (not shown) included in the first housing 10 and a second printed circuit board (not shown) included in the second housing 20 (or when there is no second printed circuit board in the second housing 20, various components {e.g., a battery, a camera module, and a sensor module} positioned in the second housing 20), and may be disposed in one area of the hinge module 30. A detailed description thereof will be described later with reference to FIGS. 3 to 5.

According to various embodiments, the first microphone 251 may be disposed to be spaced apart from the speaker 255 in the horizontal direction (X-axis). Similarly, the third microphone 253 may be disposed to be spaced apart from the speaker 255 in the horizontal direction (X-axis) in the folded state. This is to improve voice recognition performance (e.g., barge-in performance) through the microphones 251 and 253 by reducing the inflow of a sound signal output through the speaker 255 into the microphones 251 and 253 while the sound signal is output through the speaker 255. According to an embodiment, the first microphone 251 may be disposed to be spaced apart from the receiver 256 by a predetermined distance or more in the horizontal direction when the electronic device 201 is folded. According to an embodiment, the first microphone 251 and the third microphone 253 may be disposed so as not to meet each other (e.g., disposed to be spaced apart from each other by a predetermined distance or more) when the electronic device 201 is folded.

According to various embodiments, the second microphone 252 may be positioned at a central portion of the hinge module 30. According to some embodiments, the second microphone 252 may be disposed at one end of the hinge module 30 to have a maximum separation distance from the receiver 256. According to an embodiment, under the control of a processor (not shown) (e.g., the processor 120), the second microphone 252 may be activated to collect voice signals when a voice recognition function is enabled while the foldable electronic device 201 is folded.

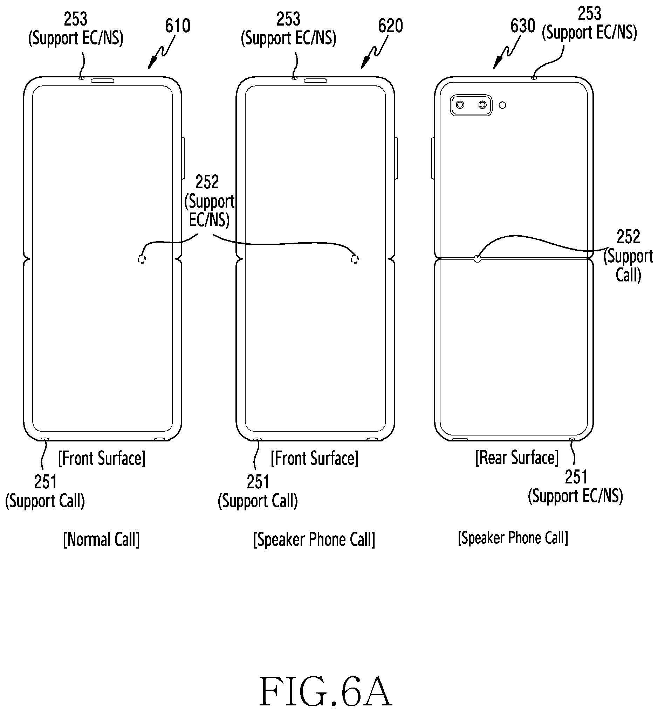

According to various embodiments, the roles (or usages) of the first microphone 251, the second microphone 252, and the third microphone 253 may be changed based on the state (e.g., a folded state, an intermediate-folded state, or an unfolded state) of the foldable electronic device 201 and/or an executed function (e.g., a normal call function, a speaker phone call function, a video recording function, or a voice recording function). A detailed description thereof will be described later with reference to FIGS. 6A to 7B.

Although the foldable electronic device 201 has been illustrated and described as including three microphones above, according to some embodiments, the foldable electronic device 201 may include the first microphone 251 and the second microphone 252. In addition, although the foldable electronic device 201 is illustrated as including one speaker 255, the foldable electronic device 201 may include two or more speakers.

In the above, the first microphone 251, the second microphone 252, and the third microphone 253 have been illustrated and described as one, but at least one of the first microphone 251, the second microphone 252, and the third microphone 253 may include two or more microphones.

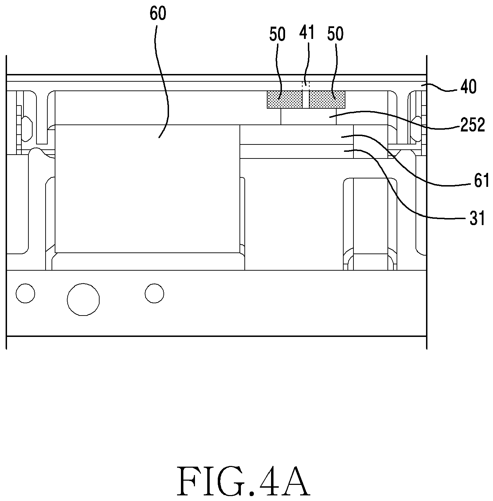

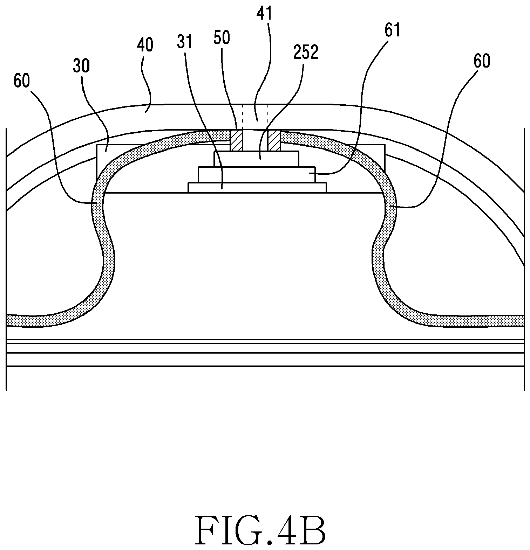

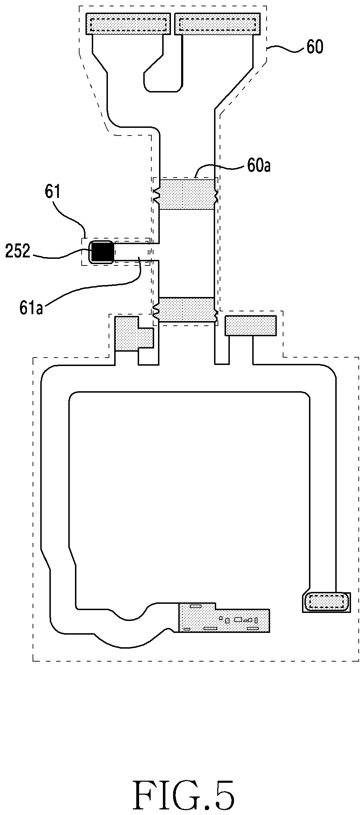

FIG. 3 is a diagram illustrating an example of a hinge module in which a second microphone is positioned according to various embodiments of the disclosure, FIG. 4A is a cross-sectional view illustrating an electronic device in a folded state with respect to A-A' according to various embodiments of the disclosure, FIG. 4B is a cross-sectional view illustrating an electronic device in an unfolded state with reference to B-B' according to various embodiments of the disclosure, and FIG. 5 is a diagram illustrating an example of a flexible printed circuit board according to various embodiments of the disclosure.

Referring to FIGS. 3 to 5, the second microphone 252 according to various embodiments of the disclosure may be disposed on one side of the hinge module 30. For example, the second microphone 252 may be disposed on a seating portion 31 of the hinge module 30 through a second FPCB 61. The second FPCB 61 extends from a first FPCB 60. The first FPCB 60 electrically connects a first printed circuit board (not shown) in the first housing 10 and a second printed circuit board (not shown) in the second housing 20.

According to various embodiments, the second microphone 252 may collect sound signals through a second microphone hole 41 in the hinge cover 40. A sound insulating member 50 between the second microphone 252 and the hinge cover 40, allows external sound from the second microphone hole 41 to be transmitted to the second microphone 252. The external sound can be transmitted without leakage (or to prevent sound leakage). The sound insulating member 50 may include a rubber and/or a sponge. The sound insulating member 50 may have a cylindrical shape surrounding the second microphone hole 41.

According to some embodiments, a mesh network prevents foreign substances (e.g., dust) from entering may be further provided between the sound insulating member 50 and the second microphone hole 41 of the hinge cover 40.

According to various embodiments, the first FPCB 60 and the second FPCB 61 may be integrated as shown in FIG. 5. According to an embodiment, the first FPCB 60 and the second FPCB 61 may be constituted of a plurality of layers (e.g., six layers). A tensile force may be generated in a partial region 60a (e.g., a portion passing through the hinge module 30) of the first FPCB 60 and a partial region 61a of the second FPCB 61 when the folding or unfolding operation of the electronic device is performed. In order to prevent damage (e.g., cracks and tears) due to the tensile force, the layers of the first FPCB 60 and the second FPCB 61 may be formed of a single sheet. In addition, the partial region 60a of the first FPCB 60 and the partial region 61a of the second FPCB 61 may include an air gap on some layers (e.g., a second layer, a third layer, and a fourth layer in which wirings for the second microphone 252 exist).

Meanwhile, although the second FPCB 61 has been illustrated and described as extending from (integral type) the first FPCB 60 in FIG. 5, the second FPCB 61 may be a separate component connectable to the first FPCB 60.

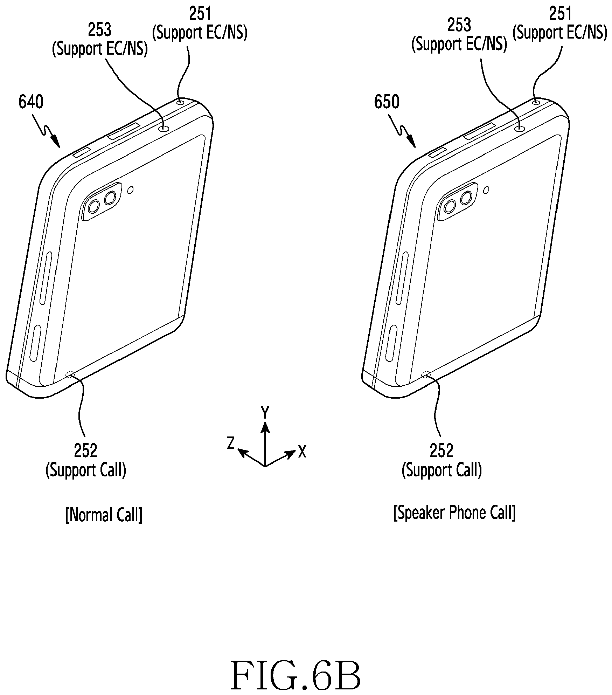

FIG. 6A is a diagram illustrating an example of operation of sound input modules when a call is performed in an unfolded state of an electronic device according to various embodiments of the disclosure, and FIG. 6B is a diagram illustrating an example of operation of sound input modules when a call is performed in a folded state of an electronic device according to various embodiments of the disclosure.

Referring to FIGS. 6A and 6B, an electronic device (e.g., the electronic device 101 or the foldable electronic device 201) according to various embodiment of the disclosure may appropriately change the roles (or usages) of a plurality of microphones (e.g., the first microphone 251 to the third microphone 253) when performing a call in an unfolded state or a folded state. For example, as illustrated in reference numeral 610 of FIG. 6A, the electronic device (e.g., a processor) may control the first microphone 251 to support a call function during a regular call in the unfolded state, and may control the second microphone 252 and the third microphone 253 to support echo canceling (EC) and/or noise suppression (NS) functions. In the unfolded state, it can be seen that microphone 251 is disposed away from the speaker.

As another example, as illustrated in reference numeral 620 of FIG. 6A, the electronic device may control the first microphone 251 to support a call function during a speaker phone call while the electronic device is unfolded and placed on a desk with the display facing upward, and may control the second microphone 252 and the third microphone 253 to support the echo canceling and/or noise suppression functions.

As still another example, as illustrated in reference numeral 630 of FIG. 6A, the electronic device may control the second microphone 252 to support the call function during a speaker phone call while the electronic device is unfolded and placed on a desk with the display facing downward, and may control the first microphone 251 and the third microphone 253 to support the echo canceling (EC) and/or noise suppression (NS) functions.

As yet another example, as illustrated in reference numerals 640 or 650 of FIG. 6B, the electronic device may control the second microphone 252 to support the call function during a normal call or a speaker phone call while the electronic device is folded, and may control the first microphone 251 and the third microphone 253 to support the echo canceling (EC) and/or noise suppression (NS) functions. This is because, when the electronic device is folded, the first microphone 251 and the third microphone 253 are positioned adjacent to the receiver 256 configured to output a received sound, whereas the second microphone 252 is positioned spaced apart from the receiver 256. The electronic device according to various embodiments of the disclosure may provide the call function even in the folded state by using the second microphone 252 disposed on the hinge module to be spaced apart from the receiver 256 configured to output a received sound.

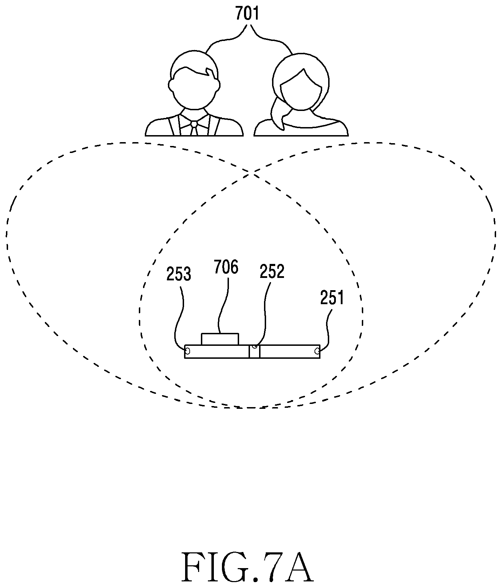

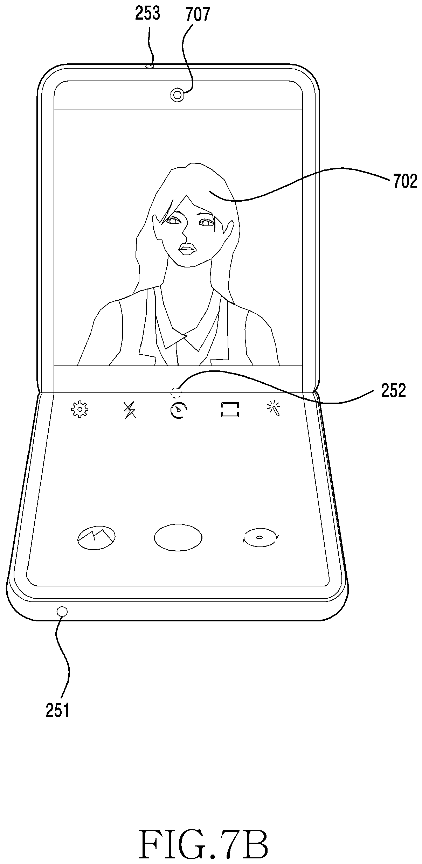

FIG. 7A is a diagram illustrating an example in which an electronic device provides an audio zoom function using sound input modules in an unfolded state according to various embodiments of the disclosure, and FIG. 7B is a diagram illustrating an example in which an electronic device provides an audio zoom function using sound input modules in an intermediate-folded state according to various embodiments of the disclosure.

In certain embodiments, the different ones of the first microphone 251, second microphone 252, and third microphone 253 can be used for audio zoom.

Referring to FIGS. 7A and 7B, an electronic device (e.g., the electronic device 101 or the foldable electronic device 201) according to various embodiments of the disclosure may provide an audio zoom function by using a plurality of microphones (e.g., the first microphone 251 to the third microphone 253) in an unfolded state or an intermediate-folded state. For example, as shown in FIG. 7A, the electronic device may control the plurality of microphones to support the audio zoom function (or a beam forming function) when recording a video using a first camera 706 positioned on a rear surface thereof. For example, the electronic device may analyze audio signals collected through the plurality of microphones to identify a direction in which a subject 701 is located, and may control the plurality of microphones so that a beam pattern is formed in the identified direction. The direction which the subject 701 is located can be determined based on the time of arrival of sound corresponding to the same utterance at each of the microphones 251, 252, and 253. For example, a sound made by the user at time t0 will be received at times 11, t2, and t3 at microphones 251, 252, and 253. From times 11, t2, and t3, the direction of the user can be determined. As the beam pattern is formed to face the subject 702, the electronic device may record an audio signal (e.g., voice of the subject 701) received through the second microphone 252 facing in the direction of the subject 701 to be relatively larger than other surrounding audio signals (or remove the other surrounding audio signals or record the audio signal to be smaller than the other surrounding audio signals).

As another example, as illustrated in FIG. 7B, the electronic device may control the plurality of microphones to support the audio zoom function when photographing (e.g., recording) a user 702 using a second camera 707 positioned in the front surface in an intermediate-folded state. For example, the electronic device may record an audio signal (e.g., voice of the user 702) received through the first microphone 251 facing in the direction of the user 702 to be relatively larger than other surrounding audio signals.

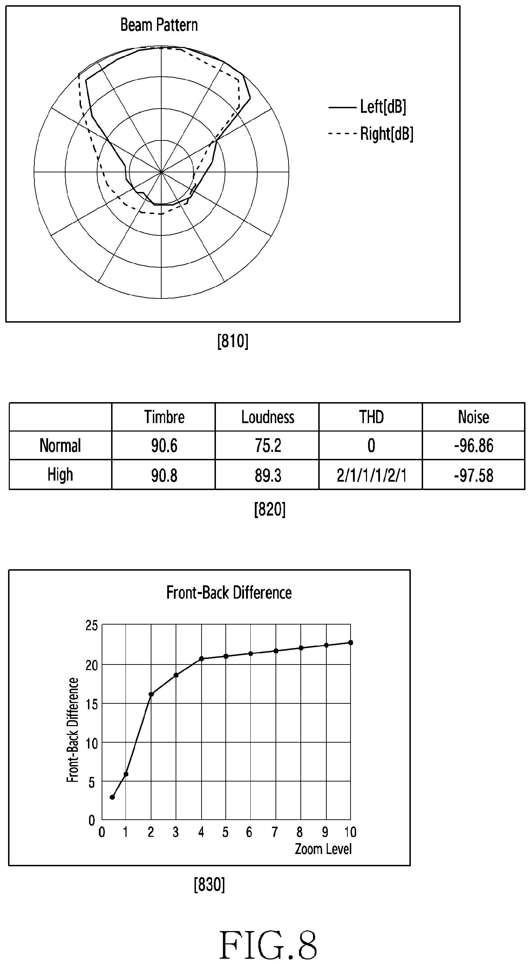

FIG. 8 is a diagram illustrating an effect of an audio zoom function of an electronic device according to various embodiments of the disclosure.

Referring to FIG. 8, an electronic device (e.g., the electronic device 101 or the foldable electronic device 201) according to various embodiments of the disclosure may provide an audio zoom function when recording a video. For example, as illustrated in FIG. 7A, the electronic device may provide the audio zoom function by using a microphone (e.g., the second microphone 252) facing a subject when recording a video using a rear camera. The electronic device that provides the audio zoom function may enable an audio beam pattern to face the front (e.g., a direction of 0 degrees) where the subject is positioned, as illustrated in reference numeral 810. In addition, referring to timbre, loudness, total harmonic distortion (THD), and noise values of reference numeral 820, in the electronic device providing the audio zoom function according to various embodiments of the disclosure, it can be seen that the timbre and loudness of the subject's voice are improved and there is little or no distortion and/or noise.

The electronic device according to various embodiments of the disclosure may adjust (control) an audio zoom level to increase a difference between the subject's voice (e.g., front sound) and noise (e.g., back sound) as illustrated in reference numeral 830.

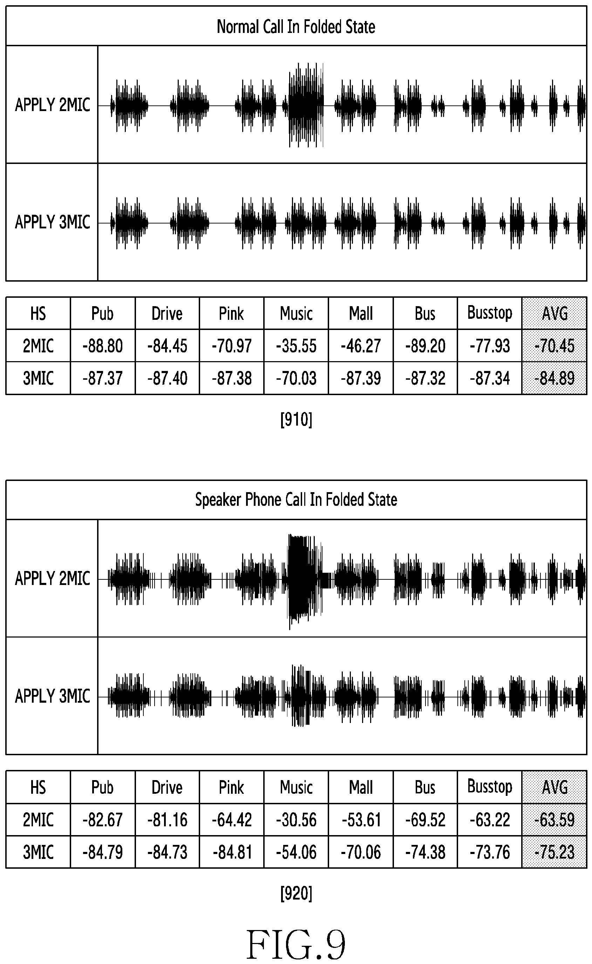

FIG. 9 is a diagram illustrating experimental results on echo canceling performance and noise suppression performance of an electronic device according to various embodiments of the disclosure.

Referring to FIG. 9, an electronic device (e.g., the electronic device 101 or the foldable electronic device 201) according to various embodiments of the disclosure may include (include three microphones) a microphone (e.g., the second microphone 252) in a hinge module (e.g., the hinge module 30), so that it can be seen that echo canceling performance and noise suppression performance are improved compared to the electronic device that does not include the microphone in the hinge module (including two microphones). For example, during a normal call in the folded state (e.g., the state of reference numeral 640 in FIG. 6B), it can be seen that the echo canceling performance and noise suppression performance are improved by 14.44 dB (= 84.89 - 70.45) on average as illustrated in reference numeral 910. In addition, during a speaker phone call in the folded state (e.g., the state of reference numeral 650 of FIG. 6B), it can be seen that the echo canceling performance and noise suppression performance are improved by 11.64 dB (= 75.23 - 63.59) on average as illustrated in reference numeral 920.

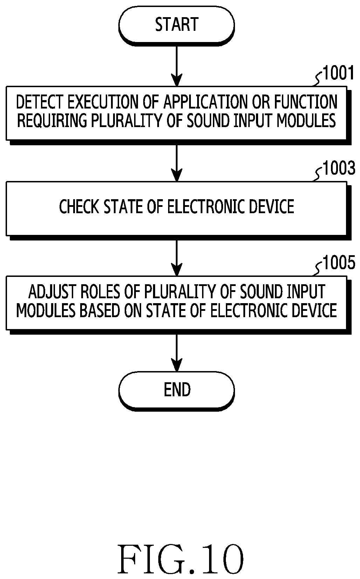

FIG. 10 is a flowchart illustrating a method of operating an electronic device according to various embodiments of the disclosure.

Referring to FIG. 10, in operation 1001, a processor (e.g., processor 120) of an electronic device (e.g., the electronic device 101 or foldable electronic device 201) according to various embodiments of the disclosure may detect the execution of an application or function that requires a plurality of sound input modules (e.g., the first microphone 251, the second microphone 252, and the third microphone 253). For example, the processor may detect the execution of a call application, a video recording function of a camera application, and a voice recording function of a recording application.

According to various embodiments, in operation 1003, the processor may check the state of the electronic device. The state of the electronic device may include a folded state, an intermediate-folded state, and an unfolded state. The state of the electronic device may further include a state in which a front surface on which a display (e.g., the display module 160 or the display 260) is positioned faces the floor and a state in which a rear surface opposite the front surface faces the floor.

According to various embodiments of the disclosure, in operation 1005, the processor may adjust the roles of the plurality of sound input modules based on the checked state of the electronic device. Since the method of adjusting the roles of the sound input modules has been described in detail with reference to FIGS. 6A to 7B, a description of the method of adjusting the roles of the sound input modules will be omitted to avoid overlapping descriptions.

In the above, various embodiments of the disclosure have been described through the foldable electronic device that is folded with respect to the horizontal direction (X axis). However, various embodiments of the disclosure may also be applied to a foldable electronic device that is folded with respect to the vertical direction (Y axis). According to various embodiments of the disclosure, a microphone may be disposed on a hinge module for folding, so that it is possible to improve the degree of freedom for microphone arrangement (or to relieve restrictions on microphone arrangement) and to arrange a relatively large number of microphones, thereby providing performance enhancements for various functions (e.g. audio zoom, echo canceling, and noise suppression) using a plurality of microphones.

According to various embodiments of the disclosure, an electronic device (e.g., the electronic device 101 or the foldable electronic device 201) may include a first housing (e.g., the first housing 10); a first substrate disposed in the first housing; a second housing (e.g., the second housing 20); a second substrate disposed in the second housing; a flexible printed circuit board (the first FPCB 60); a hinge module (e.g., a hinge module 30) hingably connecting the first housing and the second housing; a hinge cover (e.g., the hinge cover 40) covering the hinge module having a microphone hole (e.g., the second microphone hole 52) formed therein; at least one first microphone (e.g., the first microphone 251) disposed in the first housing; a speaker (e.g., the receiver 256) in the second housing; and at least one second microphone (e.g., the second microphone 252) to be disposed in the hinge module, and configured to collect external sound through the microphone hole formed in the hinge cover, and mounted on a portion (e.g., the second FPCB 61) extending from the flexible printed circuit board (FPCB) (e.g., the first FPCB 60).

According to various embodiments, the electronic device may further include a sound insulating member (e.g., the sound insulating member 50) positioned between the hinge cover and the second microphone and configured to prevent sound leakage of the external sound.

According to various embodiments, the FPCB may include a plurality of layers composed of a single sheet.

According to various embodiments, the FPCB may include an air gap in some layers of a region positioned within the hinge module.

According to various embodiments, the electronic device may further include at least one processor (e.g., the processor 120). The at least one processor may communicate with the second microphone when performing a phone call in a folded state, and communicate with the first microphone when performing the phone call in an unfolded state.

According to various embodiments, the at least one processor may communicate with the second microphone when performing a speaker phone call in the folded state, may communicate with the second microphone when performing the speaker phone call while the electronic device is unfolded and a rear surface of the electronic device is placed to face upward, and may communicate with the first microphone as the communication microphone when performing the speaker phone call while the electronic device is unfolded and a front surface of the electronic device is placed to face upward.

According to various embodiments, the at least one processor may perform an audio zoom function through the second microphone when recording a video using a first camera (e.g., the first camera 706) positioned on the rear surface of the electronic device.

According to various embodiments, the at least one processor may perform an audio zoom function through the first microphone when recording a video using a second camera (e.g., the second camera 707) positioned on the front surface of the electronic device in an intermediate-folded state.

According to various embodiments, the electronic device may further include at least one third microphone (e.g., the third microphone 253) spaced apart from the speaker in the second housing.

According to various embodiments, the at least one processor may perform echo canceling or noise suppression with the first microphone and the third microphone when communicating with the second microphone is used as a communication microphone.

According to various embodiments, the at least one processor may collect voice signals by activating the second microphone when a voice recognition function is enabled in the folded state of the electronic device.

According to various embodiments of the disclosure, a method of operating an electronic device (e.g., the electronic device 101 or the foldable electronic device 201) including a first microphone positioned in a lower end of a first housing (e.g., the first housing 10) and a second microphone (e.g., the second microphone 252) positioned in a hinge module (e.g., the hinge module 30) hingably connecting the first housing and a second housing (e.g., the second housing 20), may include detecting execution of an application or function using at least one of the first microphone and the second microphone; and adjusting roles of the first microphone and the second microphone based on a state of the electronic device.

According to various embodiments, the adjusting of the roles of the first microphone and the second microphone comprises: may include communicating with the second microphone when performing a phone call function in a folded state of the electronic device; and communicating with the first microphone performing the phone call function in an unfolded state of the electronic device.

According to various embodiments, the adjusting of the roles of the first microphone and the second microphone may include communicating with the second microphone when performing a speaker phone call function in the folded state of the electronic device.

According to various embodiments, the adjusting of the roles of the first microphone and the second microphone may include communicating with the second microphone when performing the speaker phone call function while the electronic device is unfolded and a rear surface of the electronic device is placed to face upward.

According to various embodiments, the adjusting of the roles of the first microphone and the second microphone comprises may include: communicating with the first microphone as the communication microphone when performing the speaker phone call function while the electronic device is unfolded and a front surface of the electronic device is placed to face upward.

According to various embodiments, the adjusting of the roles of the first microphone and the second microphone comprises: performing an audio zoom function through the second microphone when performing a video recording function using a first camera (e.g., the first camera 706) positioned on the rear surface in an unfolded state of the electronic device.

According to various embodiments, the adjusting of the roles of the first microphone and the second microphone comprises may include performing the audio zoom function through the first microphone when performing a video recording function using a second camera (e.g., the second camera 707) positioned on the front surface in an intermediate-folded state of the electronic device.

According to various embodiments, the plurality of sound input modules may further include a third microphone (e.g., the third microphone 253) positioned at an upper end of the electronic device. The adjusting of the roles of the the first microphone and the second microphone may include controlling the first microphone and the third microphone to support an echo canceling function and/or a noise suppression function when communicating with the second microphone.

According to various embodiments, the adjusting of the roles of the first microphone and the second microphone may include activating the second microphone to collect voice signals when a voice recognition function is enabled in the folded state of the electronic device.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may also be separately disposed in another element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
first housing;
a first substrate disposed in the first housing;
a second housing;
a second substrate disposed in the second housing;
a flexible printed circuit board (FPCB) connecting the first substrate and the second substrate;
a hinge module hingably connecting the first housing and the second housing;
a hinge cover covering the hinge module, and having a microphone hole formed therein;
at least one first microphone disposed in the first housing;
a speaker disposed in the second housing; and
at least one second microphone disposed in the hinge module, and configured to collect external sound through the microphone hole formed in the hinge cover, and mounted on a portion extending from the FPCB.

2. The electronic device of claim 1, further comprising:
a sound insulating member positioned between the hinge cover and the at least one second microphone and configured to prevent sound leakage of the external sound.

3. The electronic device of claim 1, wherein the FPCB includes a plurality of layers composed of a single sheet.

4. The electronic device of claim 3, wherein the FPCB includes an air gap in some layers of a region positioned within the hinge module.

5. The electronic device of claim 1, further comprising:
at least one processor,
wherein the at least one processor
communicates with the at least one second microphone when performing a phone call in a folded state, and
communicates with the at least one first microphone when performing the phone call in an unfolded state.

6. The electronic device of claim 5, wherein the at least one processor:
communicates with the at least one second microphone when performing a speaker phone call in the folded state,
communicates with the at least one second microphone when performing the speaker phone call while the electronic device is unfolded and a rear surface of the electronic device is placed to face upward, and
communicates with the at least one first microphone when performing the speaker phone call while the electronic device is unfolded and a front surface of the electronic device is placed to face upward.

7. The electronic device of claim 5, wherein the at least one processor performs an audio zoom function through the at least one second microphone when recording a video using a first camera positioned on a rear surface of the electronic device.

8. The electronic device of claim 5, wherein the at least one processor performs an audio zoom function through the at least one first microphone when recording a video using a second camera positioned on a front surface of the electronic device in an intermediate-folded state.

9. The electronic device of claim 1, further comprising:
at least one third microphone spaced apart from the speaker in the second housing.

10. The electronic device of claim 9, further comprising:
at least one processor,
wherein the at least one processor performs echo canceling or noise suppression with the at least one first microphone and the at least one third microphone when communicating with the at least one second microphone.

11. The electronic device of claim 5, wherein the at least one processor collects voice signals by activating the at least one second microphone when a voice recognition function is enabled in the folded state of the electronic device.

12. A method of operating an electronic device including a first microphone positioned in a lower end of a first housing and a second microphone positioned in a hinge module hingably connecting the first housing and a second housing, the method comprising:
detecting execution of an application or function using at least one of the first microphone and the second microphone;
and adjusting roles of the first microphone and the second microphone based on a state of the electronic device.

13. The method of claim 12, wherein adjusting of the first microphone and the second microphone comprises:
communicating with the second microphone when performing a phone call function in a folded state of the electronic device; and
communicating with the first microphone when performing the phone call function in an unfolded state of the electronic device.

14. The method of claim 12, wherein adjusting of the roles of the first microphone and the second microphone comprises:
communicating with the second microphone when performing a speaker phone call function in a folded state of the electronic device.

15. The method of claim 12, wherein adjusting of the roles of the first microphone and the second microphone comprises: communicating with the second microphone when performing a speaker phone call function while the electronic device is unfolded and a rear surface of the electronic device is placed to face upward.
